# FASCICULE DE BREVET EUROPEEN

(11) **EP 1 784 060 B1**
(45) Date de publication et mention de la délivrance du brevet: **29.05.2019**
(21) Numéro de dépôt: 05360044.1
(22) Date de dépôt: 03.11.2005
(51) Int. Cl.: H05B 39/04, H05B 37/03

(54) **Procédé de détection de la déconnexion d'une charge d'un variateur de lumière**
Verfahren zum Erkennen der Trennung einer Last von einem Dimmer
Method for detecting the disconnection of a load from a dimmer

(43) Date de publication de la demande: 09.05.2007
(73) Titulaire: HAGER CONTROLS (Société par Actions Simplifiée), 67700 Saverne (FR)
(72) Inventeur: Elsass, Marc, 67140 Barr (FR); Poisson, Christophe, 67700 Saverne (FR)
(74) Mandataire: Nuss, Laurent

(56) Documents cités:
- EP-A- 0 618 667
- EP-A- 0 923 274
- EP-A- 1 313 205
- FR-A- 2 856 236
- US-A1- 2001 014 949

## Description

La présente invention concerne des procédés de détection de la déconnexion de la charge lumineuse d'un variateur de lumière connecté au secteur, ainsi qu'un dispositif permettant la mise en oeuvre de ces procédés.

Les variateurs de lumière concernés par l'invention disposent d'un étage d'alimentation variable de la charge par découpage de phase, selon un fonctionnement du type gradateur. Le but est de fournir à la charge un courant alternatif, de même fréquence que la tension qui alimente l'appareil, mais non sinusoïdal et dont la valeur efficace est réglable. Le signal délivré par le gradateur est découpé dans une sinusoïde, ce qui permet un contrôle précis de la puissance absorbée par le récepteur.

Le mode de découpage dépend de la nature de la charge. Ainsi, lorsque la charge est inductive, elle est alimentée selon un mode dit de conduction à l'angle par lequel un amorçage angulairement décalé par rapport au passage de la tension par zéro permet de supprimer la portion de chaque alternance suivant immédiatement le passage par zéro. Le mode conduction à l'angle, également adapté aux charges résistives, provoque des surintensités lorsqu'une charge de nature capacitive est placée en sortie de l'étage d'alimentation.

Le document US2001/0014949 A1 divulgue un dispositif gradateur à découpage de phase pour régler la puissance fournie à une charge.

Le mode de fonctionnement qui convient aux charges capacitives, dit de coupure à l'angle, préserve l'intégrité du début de chaque alternance jusqu'à une valeur angulaire à partir de laquelle ladite alternance est découpée. Ce mode de fonctionnement n'est pas approprié pour les charges inductives, dans lesquelles **I** provoque des surtensions pouvant aboutir à la destruction du variateur. Il peut en revanche aussi être utilisé avec des charges résistives.

Il existe des variateurs qui sont capables de s'adapter automatiquement à la nature de la charge lors de leur mise sous tension. Les étages de puissance fournissant l'alimentation des charges dans ces variateurs, basés sur des transistors par exemple du type IGBT ou MOSFET qui peuvent fonctionner suivant les deux modes précités, maintiennent cependant l'état de la sortie du variateur inchangé lors de la déconnexion d'une charge. Le mode de découpage et la consigne de commande précédents sont donc réappliqués à l'identique lors de la connexion d'une nouvelle charge en sortie du variateur. Une telle hypothèse n'est pas improbable en cas d'utilisation du variateur sur une prise commandée.

La nouvelle charge peut en effet être de nature différente, et inadaptée au mode de découpage précédent (voire inadaptée aux caractéristiques du variateur), ce qui peut générer des surintensités / surtensions dans le variateur. Le réallumage d'une charge munie d'un interrupteur, comme une lampe à pied, peut également générer des phénomènes transitoires dommageables lorsque le même niveau d'alimentation lui est brutalement réappliqué.

Pour faire face à ces problèmes, les variateurs actuels comportent des éléments de protection statique, par exemple des varistances et/ou des diodes transils qui procèdent par écrêtage de la surtension pour limiter le niveau d'énergie qu'ils subissent. Ces composants ne peuvent cependant subir ces phénomènes qu'un nombre limité de fois, et la protection qu'ils offrent est par conséquent restreinte dans le temps. L'énergie encaissée peut en effet s'avérer très importante, d'où par ailleurs une tentation de surdimensionner l'étage de protection par rapport à la charge nominale utilisable, surdimensionnement qui a évidemment une incidence économique défavorable sur le produit, et ne garantit pas pour autant le maintien de son intégrité à long terme.

La présente invention remédie à ces inconvénients, en proposant des procédés permettant de couper automatiquement la sortie du variateur lors d'une déconnexion de la charge, de manière à pouvoir remettre dans tous les cas le variateur en service en utilisant une procédure de mise en fonction sécurisée faisant notamment intervenir une détection de la nature de la charge aux bornes du variateur.

L'objet principal de l'invention est donc de détecter la déconnexion de la charge en sortie du variateur, que celle-ci soit alimentée ou non.

Dans l'hypothèse où la charge n'est pas alimentée, le procédé de l'invention se caractérise en ce qu'il comporte les étapes suivantes :
- mesure de la tension entre la phase et la sortie de l'étage d'alimentation ;
- comparaison d'au moins une fraction de cette tension avec une fraction correspondante d'une tension seuil prédéterminée inférieure à la tension crête du secteur ; et
- blocage du variateur dans l'état de non alimentation de la charge si la tension mesurée est inférieure à la tension seuil prédéterminée.

Lorsque la charge est présente, le neutre du secteur est ramené à la sortie de l'étage d'alimentation, dite sortie charge. Il en résulte une tension entre phase et sortie charge qui est comprise entre 50 V et 200 V crête, valeur tenant compte des impédances du variateur, de la charge minimale raccordable et du câblage. La comparaison vise par conséquent à contrôler si la tension mesurée est supérieure à un seuil prédéterminé qui reflète le comportement du variateur en fonctionnement sur une charge.

Si la charge est absente, impliquant la possibilité pour le variateur d'avoir à gérer ultérieurement la connexion d'une nouvelle charge potentiellement non adaptée au mode d'alimentation en place, le variateur se met dans un état de blocage avec la sortie charge coupée. Cela permet de préparer et d'uniformiser la mise en place d'un protocole de redémarrage sécurisé du variateur.

Dans l'hypothèse où la détection est mise en oeuvre lorsque la charge est alimentée, le procédé de détection de la déconnexion de la charge lumineuse selon l'invention comporte les étapes suivantes :
- mesure du déphasage entre la tension du secteur et le courant qui traverse la charge, pour une valeur donnée de consigne de commande de l'étage d'alimentation de la charge ;
- détection et mesure de la variation de ce déphasage en l'absence de modification de ladite consigne ;
- comparaison entre la variation de déphasage mesurée et une valeur seuil de variation prédéterminée ; et
- modification de la consigne de commande de l'étage d'alimentation pour le placer dans un état de non alimentation de la charge si la valeur de variation de déphasage mesurée excède la valeur seuil prédéterminée.

La méthode est basée sur le fait que lorsqu'une charge est connectée et alimentée avec un certain angle de conduction, le déphasage entre la tension du secteur et le courant qui traverse la charge est constant. Cela n'est plus systématiquement vrai si la charge est déconnectée, puisque l'impédance de charge du variateur change. Le déphasage courant / tension peut par conséquent également changer.

La variation du déphasage est détectée à partir d'un certain seuil, par exemple compris entre ± 100 µs et ± 1 ms et au-delà duquel la sortie charge du variateur est coupée.

Selon une variante possible, permettant toujours la détection de la déconnexion d'une charge lorsque la sortie du variateur n'est pas coupée, le procédé de l'invention est caractérisé en ce qu'il comporte les étapes suivantes :
- détection du passage par zéro du courant dans la charge ;
- génération d'un signal résultant de synchronisation courant ;
- mesure du rapport cyclique dudit signal ;
- détection et mesure d'une variation du rapport cyclique ;
- comparaison entre la variation de rapport cyclique mesurée et une valeur seuil de variation prédéterminée ; et
- modification de la consigne de commande de l'étage d'alimentation pour le placer dans un état de non alimentation de la charge si la valeur de variation de rapport cyclique mesurée excède la valeur seuil prédéterminée.

Cette variante se base sur le fait que, lorsqu'une charge est connectée et alimentée avec un certain angle de conduction, le rapport cyclique du signal de synchronisation du passage par zéro du courant dans la charge est de l'ordre de 50%.

Si la charge est déconnectée, le rapport cyclique peut changer, et cette variation est détectée à partir d'un certain seuil de variation au delà duquel la déconnexion de charge est avérée. De préférence, cette valeur seuil peut être comprise entre 1% et 10%. Lorsqu'elle est atteinte, la sortie du variateur est coupée.

Dans les deux variantes, après coupure de l'alimentation en sortie charge, selon l'invention, il est procédé à une vérification supplémentaire de la présence ou non de la charge, selon le procédé décrit auparavant lorsque la charge n'est pas alimentée, en vue de mettre le variateur dans un état de blocage en maintenant sa sortie à l'état coupé si la charge est effectivement déconnectée.

Dans l'hypothèse inverse, la variation de déphasage courant / tension ou la modification du rapport cyclique du signal de synchronisation courant sont considérés comme accidentels et la sortie charge du variateur est à nouveau mise dans un état d'alimentation, en quelques dizaines de millisecondes, dans le mode de découpage de phase précédemment appliqué et avec la consigne précédente.

Lorsqu'il est procédé à ladite vérification par mesure de la tension entre la phase et la sortie de l'étage d'alimentation, la valeur de la tension seuil est à nouveau choisie dans l'intervalle entre 50 V et 200 V crête.

De préférence, le variateur selon l'invention doit intégrer un procédé global de détection de connexion de la charge lumineuse, qui ne préjuge pas a priori que la charge soit alimentée ou non. Ledit procédé global commence par conséquent par vérifier l'état d'alimentation de la charge par contrôle de la valeur de consigne de commande de l'étage d'alimentation de la charge. Ce procédé intègre les deux variantes précédentes basées sur la mesure de la variation du déphasage entre la tension secteur et le courant qui circule dans la charge d'une part, et la variation du rapport cyclique du signal de synchronisation du passage par zéro du courant d'autre part. Ces deux variantes sont de préférence mises en oeuvre en parallèle dans le procédé global.

Dans les deux hypothèses de fonctionnement, les valeurs seuils sont bien entendu du même ordre que celles qui ont été précisées ci-dessus.

Dans les deux cas également, la détection de la déconnexion lorsque l'étage de puissance alimente la charge est suivie par la vérification de ladite déconnexion.

Outre les procédés décrits auparavant, l'invention s'applique à un dispositif de détection permettant la mise en oeuvre des procédés ci-dessus.

A titre essentiel, ce dispositif comporte de façon connue en soi, outre l'étage d'alimentation variable de la charge par découpage de phase, une unité programmable de contrôle et de pilotage du variateur, un étage de détection des surtensions, un étage de détection du passage par zéro du courant dans la charge, et un étage de détection du passage par zéro de la tension. Selon l'invention, il se caractérise en ce qu'il comporte au surplus un étage de mesure de la tension entre la phase du secteur et la sortie de l'étage d'alimentation.

Cette détection se fait par rapport à un seuil, dans les conditions expliquées ci-dessus, et permet de déterminer si la tension entre phase et charge est supérieure à une tension seuil prédéterminée qui reflète la réalité du fonctionnement en charge.

Selon une possibilité, l'étage de mesure comporte un comparateur à l'entrée duquel est appliquée la tension entre la phase et la sortie de l'étage d'alimentation, et comparant ladite tension à une valeur de tension seuil. La valeur seuil de tension est suffisamment élevée pour que le signal d'allure binaire disponible en sortie du comparateur reflète l'existence d'une tension entre la phase et la sortie de l'étage d'alimentation proche de la tension du secteur lorsque la charge est présente. Lorsque le comparateur ne change pas d'état, cela signifie que le neutre n'est pas ramené en sortie de l'étage d'alimentation, et qu'il n'y a par conséquent pas de charge connectée au variateur.

De préférence, la tension entre la phase et la sortie dudit étage est appliquée à l'entrée du comparateur via un pont de résistance fractionnant la tension réelle.

Enfin, il est à noter que l'étage de détection des surtensions et l'étage de mesure de la tension entre la phase et la sortie de l'étage d'alimentation sont un seul et même circuit. Le même type de fonctionnement par comparaison à un seuil permet la double dévolution de cet étage.

Ledit circuit peut être intégré à l'unité programmable (1) de contrôle et de pilotage du variateur, et la fixation de la valeur de tension seuil est alors gérée par le programme.

L'invention va à présent être décrite plus en détail, en référence aux figures, pour lesquelles :
- la figure 1 est un organigramme représentant le procédé de détection de la déconnexion de la charge dans l'hypothèse où la sortie de l'étage d'alimentation est coupée ;
- les figures 2 et 3 représentent un organigramme équivalent au précédent dans les deux variantes correspondant au cas où la sortie à l'aide du variateur n'est pas coupée ;
- la figure 4 montre un organigramme du procédé de fonctionnement global d'un variateur selon l'invention ; et
- la figure 5 illustre un schéma électronique d'un dispositif de détection de la définition d'une charge selon la présente invention.

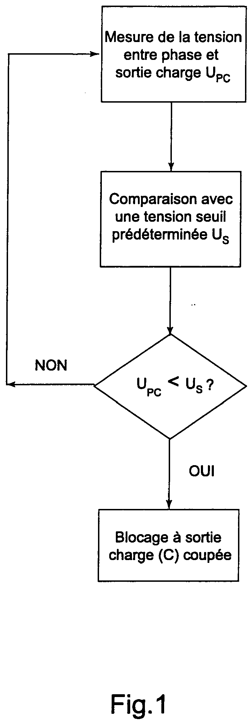

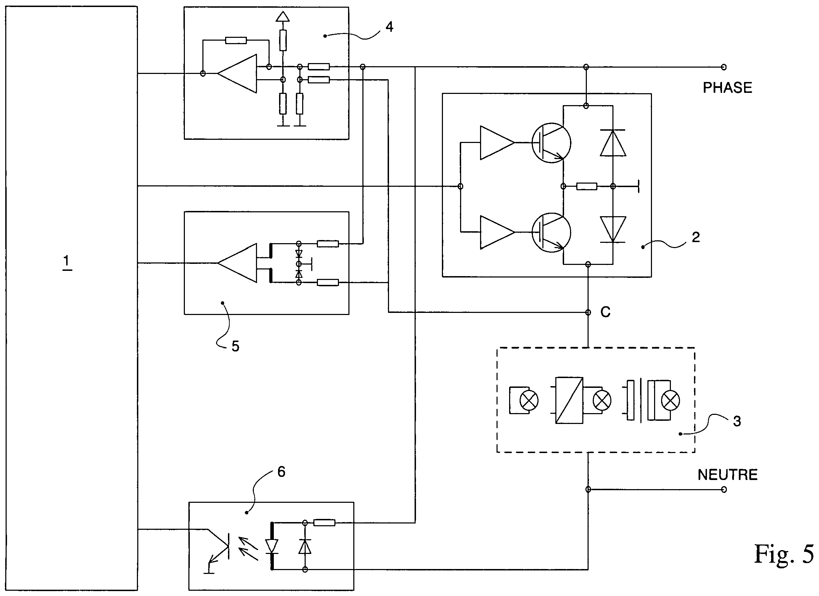

Les organigrammes faisant l'objet des figures 1 à 4 sont explicites. En référence à la figure 1, lorsque la sortie dite sortie charge (C) de l'étage de puissance n'est pas alimentée, le neutre s'y trouve ramené (voir figure 5) en présence d'une charge. Dans ce cas, la tension U_{PC} entre phase et le point (C) devrait être égale à la tension secteur. Cette tension U_{PC} est alors comparée à une tension seuil U_{S}, qui correspond par exemple à 130 V crête, valeur tenant compte des impédances du variateur et de la charge minimale raccordable.

Dans l'hypothèse où U_{PC} est inférieure à U_{S}, cela veut dire que la charge a été déconnectée, et le variateur est mis dans un état de blocage à sortie charge (C) non alimentée.

Si la tension U_{PC} est supérieure à U_{S}, la charge est présente, et la détection de sa déconnexion peut continuer en boucle.

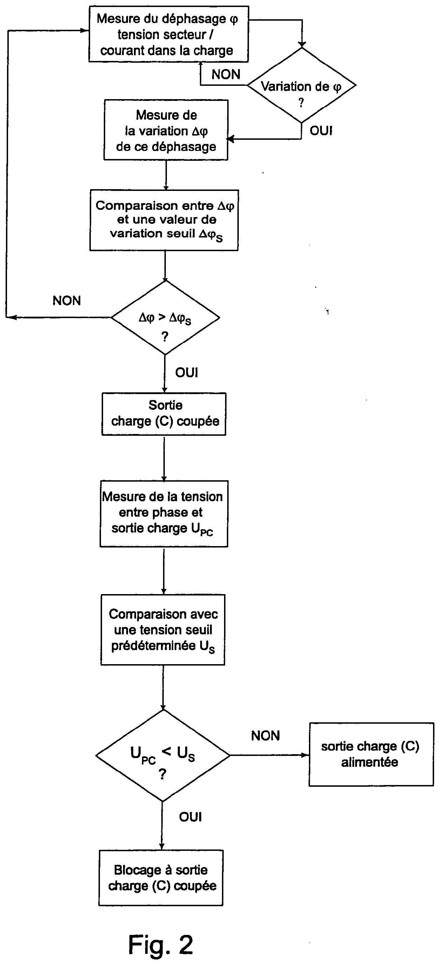

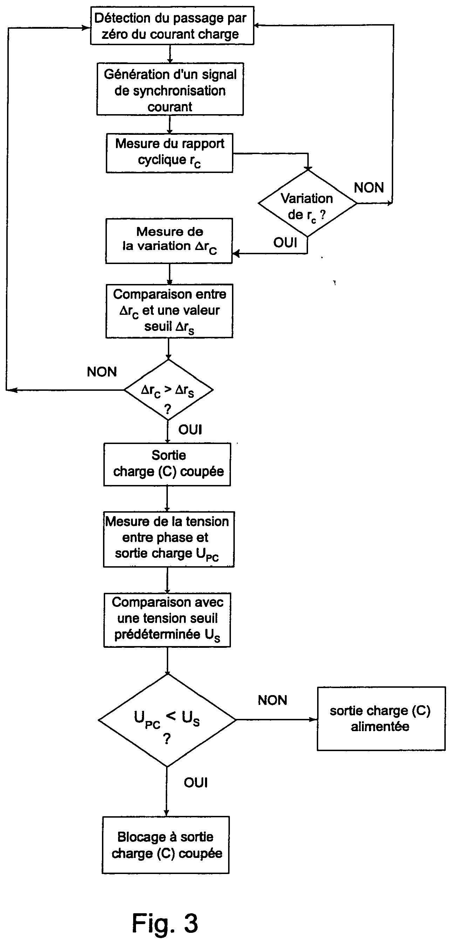

Les figures 2 et 3 montrent les deux variantes de procédé de détection de la déconnexion d'une charge, avec la sortie (C) de l'étage d'alimentation active, que l'on peut mettre en oeuvre avec le dispositif représenté en figure 5.

La première moitié de chaque organigramme concerne la détection de l'existence d'une variation, soit du déphasage tension secteur / courant dans la charge, soit du rapport cyclique du signal de synchronisation courant. En l'absence d'une telle détection, le programme fonctionne en boucle et continue à rechercher l'apparition d'une variation de l'une des deux grandeurs précitées.

En présence d'une telle détection, il est procédé à une mesure de la variation, puis à sa comparaison avec une valeur de variation seuil.

Dans les deux hypothèses, lorsque la variation respectivement du déphasage Δϕ et du rapport cyclique Δr_{c} excède la variation seuil correspondante Δϕₛ et Δrₛ, le variateur se met dans un état dans lequel la sortie de l'étage d'alimentation est coupée, puis il vérifie que la variation n'est pas accidentelle en mettant en oeuvre le procédé de la figure 1, avec une variante si U_{pc} > Uₛ : la sortie charge (C) est alors réalimentée, la variation étant considérée comme accidentelle.

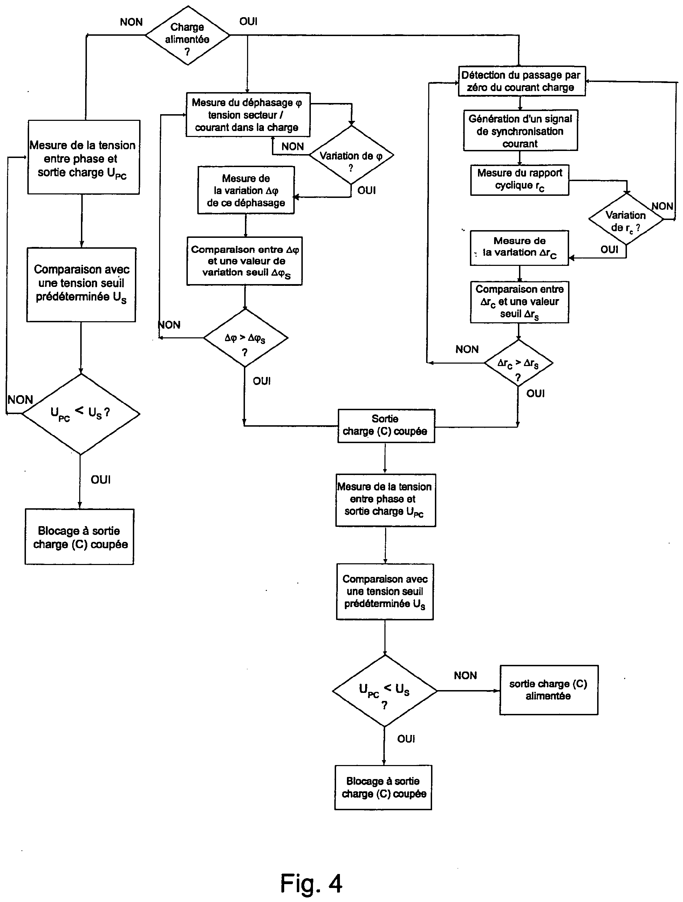

La figure 4 montre l'articulation entre les procédés pour illustrer le procédé global de détection suivi par un variateur. Dans l'hypothèse d'une sortie charge (C) alimentée, l'un au moins des deux procédés de l'invention est mis en oeuvre par le variateur. De préférence, les deux variantes sont mises en oeuvre en parallèle.

Le dispositif chargé de mettre en oeuvre les procédés apparaissant aux figures 1 à 4 est représenté en figure 5. L'unité de contrôle et de pilotage (1) du variateur consiste par exemple en un microcontrôleur programmable, apte à commander l'étage de puissance (2) pour bloquer ou laisser passer le courant alimentant la charge (3). Cette unité (1) est également prévue pour réaliser le traitement logique complet nécessaire à la détection de la déconnexion de la charge (3) (représentée sous ses trois aspects principaux : résistive, inductive et capacitive) placée entre la sortie (C) de l'étage d'alimentation (2) et le neutre. Il traite enfin les données issues de l'unité (4) de détection des surtensions et/ou de la tension de présence d'une charge (3), ainsi que celles qui proviennent des unités (5, 6) de détection du passage par zéro respectivement du courant dans la charge et de la tension secteur.

L'unité (4) de détection de tension aux bornes de la charge (3) fonctionne en comparant une fraction (déterminée par un pont de résistance) de la tension U_{pc} entre la phase et la sortie (C) de l'étage d'alimentation de phase et une fraction correspondante d'une tension seuil Uₛ qui correspond à environ 160 V crête.

Il est à noter que ce comparateur, représenté externe à l'unité de contrôle et de pilotage (1), peut y être intégré. L'unité (4) permet également la détection des surtensions, suivant le même principe de comparaison à une valeur seuil correspondant à une tension crête au-delà de laquelle la surtension est dangereuse pour le variateur. Les deux seuils utilisés sont bien entendu distincts et, dans l'hypothèse d'une intégration à l'unité de contrôle et de pilotage, le changement de seuil est géré par le programme.

L'étage de puissance (2) permettant l'alimentation de la charge est classiquement constitué de deux transistors, par exemple de type IGBT ou MOSFET, couplés à une diode, dont la consigne de blocage / déblocage est issue du microcontrôleur (1). Ce schéma classique en électronique de puissance permet de procéder à un découpage de la phase selon les deux modes utilisés, à conduction d'angle et à coupure d'angle.

L'étage (5) de détection du passage par zéro du courant dans la charge (3) est également basé sur un comparateur, fonctionnant en boucle ouverte, et dont les entrées sont respectivement reliées à la phase et à la sortie charge (C).

Enfin, l'étage de détection du passage par zéro de la tension secteur consiste en un optocoupleur dont la sortie est connectée au microcontrôleur, le signal en sortie de l'optocoupleur reflétant le signal de phase et permettant au microcontrôleur (1) de détecter le passage par zéro.

## Revendications

1. Procédé de détection de la déconnexion de la charge lumineuse (3) d'un variateur de lumière étant sous forme d'un étage d'alimentation (2) variable par découpage de phase connecté au secteur, ladite charge (3) étant placée entre d'une part la sortie de l' étage d'alimentation (2) variable par découpage de phase, et d'autre part le neutre, l'étage d'alimentation (2) étant raccordé entre la phase du secteur et la charge (3),
**caractérisé par** :
- le contrôle de la valeur de consigne de commande de l'étage d'alimentation (2) de la charge (3) ;
- si cette consigne est telle que ledit étage (2) n'alimente pas la charge (3) :
• mesure de la tension U_{pc} entre la phase et la sortie de l'étage d'alimentation (2) ;
• comparaison d'au moins une fraction de cette tension U_{pc} avec une fraction correspondante d'une tension seuil Uₛ prédéterminée inférieure à la tension crête du secteur ; et
• blocage du variateur (2) dans l'état de non alimentation de la charge (3) si la tension U_{pc} mesurée est inférieure à la tension seuil Uₛ prédéterminée.

2. Procédé de détection de la déconnexion de la charge lumineuse (3) d'un variateur de lumière selon la revendication précédente, **caractérisé en ce que** la valeur de la tension seuil Uₛ est comprise entre 50 V et 200 V crête.

3. Procédé de détection de la déconnexion de la charge lumineuse (3) d'un variateur de lumière selon l'une des revendications précédentes, **caractérisé en ce que** :
si ladite consigne est telle que ledit étage alimente la charge :
• mesure du déphasage ϕ entre la tension du secteur et le courant qui traverse la charge (3) pour une valeur donnée de consigne de commande de l'étage d'alimentation (2) de la charge (3) ;
• détection et mesure de la variation Δϕ de ce déphasage ϕ en l'absence de modification de ladite consigne ;
• comparaison entre la variation Δϕ de déphasage ϕ mesurée et une valeur seuil de variation Δϕₛ prédéterminée ; et
• modification de la consigne de commande de l'étage d'alimentation (2) pour le placer dans un état de non alimentation de la charge (3) si la valeur de variation Δϕ de déphasage ϕ mesurée excède la valeur seuil Δϕₛ prédéterminée.

4. Procédé de détection de la déconnexion de la charge lumineuse (3) d'un variateur de lumière selon l'une des revendications 1 et 2, **caractérisé en ce que** :
si cette consigne est telle que ledit étage (2) alimente la charge (3) :
• détection du passage par zéro du courant dans la charge (3) ;
• génération d'un signal résultant de synchronisation courant ;
• mesure du rapport cyclique r_{c} dudit signal ;
• détection et mesure d'une variation Δr_{c} du rapport cyclique r_{c} ;
• comparaison entre la variation Δr_{c} de rapport cyclique r_{c} mesurée et une valeur seuil Δrₛ de variation prédéterminée ; et
• modification de la consigne de commande de l'étage d'alimentation (2) pour le placer dans un état de non alimentation de la charge (3) si la valeur de variation Δr_{c} de rapport cyclique r_{c} mesurée excède la valeur seuil Δrₛ prédéterminée.

5. Procédé de détection de la déconnexion de la charge (3) d'un variateur de lumière selon l'une quelconque des revendications 3 à 4, **caractérisé en ce que** la valeur seuil Δϕₛ de déphasage ϕ est comprise entre ± 100 µs et ± 1 ms.

6. Procédé de détection de la déconnexion de la charge (3) d'un variateur de lumière selon l'une quelconque des revendications 3 à 5, **caractérisé en ce que** la valeur seuil Δr_{c} de variation du rapport cyclique r_{c} est comprise entre 1% et 10%.

7. Procédé de détection de la déconnexion de la charge (3) d'un variateur de lumière selon l'une quelconque des revendications 3 à 6, **caractérisé en ce que**, dans l'hypothèse où la valeur de consigne est telle que l'étage d'alimentation (2) alimente la charge (3), puis est mis en état de non alimentation suite à la détection de la déconnexion de la charge (3), il est procédé à :
- une mesure de la tension U_{pc} entre la phase et la sortie de l'étage d'alimentation (2) ;
- une comparaison d'au moins une fraction de cette tension U_{pc} avec une fraction correspondante d'une tension seuil Uₛ prédéterminée inférieure à la tension crête du secteur ;
- un blocage du variateur dans l'état de non alimentation de la charge (3) si la tension U_{pc} mesurée est inférieure à la tension seuil Uₛ prédéterminée ; et
- la réapplication de la consigne précédente de commande de l'étage d'alimentation (2) de la charge (3) si la tension U_{pc} mesurée entre la phase et la sortie n'est pas inférieure à la tension seuil Uₛ prédéterminée.

8. Dispositif de détection de la déconnexion d'une charge lumineuse (3) d'un variateur de lumière étant sous forme d'un étage d'alimentation (2) variable par découpage de phase connecté au secteur et mettant en oeuvre des procédés selon l'une quelconque des revendications précédentes comportant une unité programmable (1) de contrôle et de pilotage du variateur, commandant l' étage d'alimentation (2) variable de la charge (3) par découpage de phase, un étage de détection des surtensions (4), un étage de détection du passage par zéro du courant (5) dans la charge (3) et un étage de détection du passage par zéro de la tension (6) de secteur, **caractérisé en ce qu'**il comporte un étage de mesure (4) de la tension entre la phase du secteur (2) et la sortie (C) de l'étage d'alimentation (2).

9. Dispositif de détection de la déconnexion d'une charge lumineuse (3) d'un variateur de lumière selon la revendication précédente, **caractérisé en ce que** l'étage de mesure (4) comporte un comparateur à l'entrée duquel est appliquée la tension U_{pc} entre la phase et la sortie (C) de l'étage d'alimentation (2), comparant ladite tension U_{pc} à une valeur de tension seuil Uₛ.

10. Dispositif de détection de la déconnexion d'une charge lumineuse (3) d'un variateur de lumière selon la revendication précédente, **caractérisé en ce que** ladite tension U_{pc} est connectée au comparateur via un pont de résistance fractionnant la tension appliquée à l'entrée du comparateur.

11. Dispositif de détection de la déconnexion d'une charge lumineuse (3) d'un variateur de lumière selon l'une des revendications 8 à 10, **caractérisé en ce que** l'étage de détection des surtensions et l'étage de mesure (4) de la tension entre la phase et la sortie (C) de l'étage d'alimentation (2) sont un seul et même circuit.

12. Dispositif de détection de la déconnexion d'une charge lumineuse (3) d'un variateur de lumière selon la revendication précédente, **caractérisé en ce que** ledit circuit est intégré à l'unité programmable (1) de contrôle et de pilotage du variateur, et la fixation de la valeur de tension seuil est alors gérée par le programme.

## Patentansprüche

1. Verfahren zum Erkennen der Trennung der Leucht-Last (3) von einem Licht-Dimmer nach Art einer Stufe (2) zur variablen Versorgung durch Phasenanschnitt, die mit dem Netz verbunden ist, welche Last (3) zwischen einerseits dem Ausgang der Stufe (2) zur variablen Versorgung durch Phasenanschnitt und andererseits dem Neutralleiter angeordnet ist, welche Versorgungsstufe (2) zwischen der Netzphase und der Last (3) angeschlossen ist,
**gekennzeichnet durch**:
- die Steuerung des Sollwerts des Stellbefehls der Versorgungsstufe (2) der Last (3);
- wenn dieser Sollwert so gewählt ist, dass die Stufe (2) die Last (3) nicht versorgt:
• Messen der Spannung U_{pc} zwischen der Phase und dem Ausgang der Versorgungsstufe (2);
• Vergleichen wenigstens eines Teils dieser Spannung U_{pc} mit einem entsprechenden Teil einer vorbestimmten Schwellenspannung Uₛ, die geringer ist als die Spitzenspannung des Netzes; und
• Sperren des Dimmers (2) in dem Zustand der Nicht-Versorgung der Last (3), wenn die gemessene Spannung U_{pc} niedriger ist als die vorbestimmte Schwellenspannung Uₛ.

2. Verfahren zum Erkennen der Trennung der Licht-Last (3) von einem Licht-Dimmer nach dem vorhergehenden Anspruch, **dadurch gekennzeichnet, dass** der Wert der Schwellenspannung Uₛ zwischen 50 V und 200 V Spitzenspannung liegt.

3. Verfahren zum Erkennen der Trennung der Licht-Last (3) von einem Licht-Dimmer nach einem der vorhergehenden Ansprüche, **dadurch gekennzeichnet, dass**:
wenn der Sollwert so ist, dass die Stufe die Last versorgt:
• Messen der Phasenverschiebung ϕ zwischen der Netzspannung und dem Strom, der durch die Ladung (3) für einen gegebenen Stellbefehl-Sollwert der Versorgungsstufe (2) der Ladung (3) fließt;
• Erkennen und Messen der Veränderung Δϕ dieser Phasenverschiebung ϕ in Abwesenheit einer Veränderung des Sollwerts;
• Vergleichen der Veränderung Δϕ der gemessenen Phasenverschiebung ϕ und eines vorbestimmten Veränderungs-Schwellenwerts Δϕₛ; und
• Verändern des Stellbefehl-Sollwerts der Versorgungsstufe (2), um diese in einen Zustand der Nicht-Versorgung der Last (3) zu versetzen, wenn der Wert der Änderung Δϕ der gemessenen Phasenverschiebung ϕ den vorbestimmten Schwellenwert Δϕₛ übersteigt.

4. Verfahren zum Erkennen der Trennung der Licht-Last (3) von einem Licht-Dimmer nach einem der Ansprüche 1 und 2, **dadurch gekennzeichnet, dass**:
wenn der Sollwert so ist, dass die Stufe (2) die Ladung (3) versorgt:
• Erkennen des Nulldurchgangs des Stromes in der Last (3);
• Erzeugen eines resultierenden Strom-Synchronisierungssignals;
• Messen des Tastverhältnisses r_{c} des Signals;
• Erkennen und Messen einer Veränderung Δr_{c} des Tastverhältnisses r_{c};
• Vergleichen der Veränderung Δr_{c} des gemessenen Tastverhältnisses r_{c} und eines vorbestimmten Veränderungs-Schwellenwerts Δrₛ; und
• Verändern des Sollwert-Stellbefehls der Versorgungsstufe (2), um diese in einen Zustand der Nicht-Versorgung der Last (3) zu bringen, wenn der Wert der Änderung Δr_{c} des gemessenen Tastverhältnisses r_{c} den vorbestimmten Schwellenwert Δrₛ übersteigt.

5. Verfahren zum Erkennen der Trennung der Last (3) von einem Licht-Dimmer nach einem der Ansprüche 3 bis 4, **dadurch gekennzeichnet, dass** der Schwellenwert Δϕₛ der Phasenverschiebung ϕ zwischen ± 100 µs und ± 1 ms liegt.

6. Verfahren zum Erkennen der Trennung der Last (3) von einem Licht-Dimmer nach einem der Ansprüche 3 bis 5, **dadurch gekennzeichnet, dass** der Änderungs-Schwellenwert Δr_{c} des Tastverhältnisses r_{c} zwischen 1% und 10% liegt.

7. Verfahren zum Erkennen der Trennung der Last (3) von einem Licht-Dimmer nach einem der Ansprüche 3 bis 6, **dadurch gekennzeichnet, dass** unter der Annahme, dass der Sollwert so ist, dass die Versorgungsstufe (2) die Last (3) versorgt und dann in einen Zustand der Nicht-Versorgung infolge der Erkennung der Trennung der Last (3) versetzt wird, folgende Schritte durchgeführt werden:
- eine Messung der Spannung U_{pc} zwischen der Phase und dem Ausgang der Versorgungsstufe (2);
- ein Vergleich wenigstens eines Teils dieser Spannung U_{pc} mit einem entsprechenden Teil einer vorbestimmten Schwellenspannung Uₛ, die niedriger ist als die Spitzenspannung des Netzes;
- eine Sperrung des Dimmers in dem Zustand der Nicht-Versorgung der Last (3), wenn die gemessene Spannung U_{pc} kleiner ist als die vorbestimmte Schwellenspannung Uₛ; und
- die erneute Anwendung des vorhergehenden Sollwert-Stellbefehls der Versorgungsstufe (2) der Last (3), wenn die gemessene Spannung Uₚₛ zwischen der Phase und dem Ausgang nicht geringer ist als die vorbestimmte Schwellenspannung Uₛ.

8. Vorrichtung zum Erkennen der Trennung der Leucht-Last (3) von einem Licht-Dimmer nach Art einer Versorgungsstufe (2), die durch Phasenanschnitt veränderbar und mit dem Netz verbunden ist, welche zur Durchführung des Verfahrens nach einem der vorhergehenden Ansprüche ausgebildet ist und eine programmierbare Einheit (1) zum Steuern und zum Regeln des Dimmers umfasst, welche die veränderbare Versorgungsstufe (2) der Last (3) durch Phasenanschnitt steuert, eine Stufe zum Erkennen von Überspannungen (4), eine Stufe zum Erkennen des Nulldurchgangs des Stromes (5) in der Last (3) und eine Stufe zum Erkennen des Nulldurchgangs der Netzspannung (6), **gekennzeichnet durch** eine Messstufe (4) für die Spannung zwischen der Netzphase (2) und dem Ausgang (C) der Versorgungsstufe (2).

9. Vorrichtung zum Erkennen der Trennung der Leucht-Last (3) von einem Licht-Dimmer gemäß dem vorhergehenden Anspruch, **dadurch gekennzeichnet, dass** die Messstufe (4) einen Komparator aufweist, an dessen Eingang die Spannung U_{pc} zwischen der Phase und dem Ausgang (C) der Versorgungsstufe (2) angelegt ist, welcher die Spannung U_{pc} mit einem Wert der Schwellenspannung Uₛ vergleicht.

10. Vorrichtung zum Erkennen der Trennung der Leucht-Last (3) von einem Licht-Dimmer gemäß dem vorhergehenden Anspruch, **dadurch gekennzeichnet, dass** die Spannung U_{pc} mit dem Komparator verbunden ist über eine Widerstandsbrücke, welche die am Eingang des Komparators anliegende Spannung aufteilt.

11. Vorrichtung zum Erkennen der Trennung der Leucht-Last (3) von einem Licht-Dimmer nach einem der Ansprüche 8 bis 10, **dadurch gekennzeichnet, dass** die Stufe zum Erkennen von Überspannungen und die Messstufe (4) für die Spannung zwischen der Phase und dem Ausgang (C) der Versorgungsstufe (2) durch ein und denselben Schaltkreis gebildet sind.

12. Vorrichtung zum Erkennen der Trennung der Leucht-Last (3) von einem Licht-Dimmer gemäß dem vorhergehenden Anspruch, **dadurch gekennzeichnet, dass** der Schaltkreis in eine programmierbare Einheit (1) zum Steuern und Regeln des Dimmers integriert ist und das Festlegen des Wertes der Schwellenspannung durch das Programm verwaltet wird.

## Claims

1. Method for detecting the disconnection of the light load (3) of a dimmer switch in the form of a power supply stage (2) which is variable by phase control connected to the sector, said load (3) being placed between on the one hand the output of the power supply stage (2) variable by phase control and on the other hand neutral, the power supply stage (2) being connected between the phase of the sector and the load (3), **characterised by**
- control of the value of the command instruction of the power supply stage (2) of the load (3),
- if said instruction is such that said stage does not supply the load (3):
• measuring the voltage U_{pc} between the phase and the output of the power supply stage (2),
• comparing at least a fraction of this voltage U_{pc} with a corresponding fraction of a predetermined threshold voltage Uₛ lower than the peak voltage of the sector and
• blocking the dimmer switch (2) in the state of non-supply of load (3) if the measured voltage U_{pc} is lower than the predetermined threshold voltage Uₛ.

2. Method for detecting the disconnection of the light load (3) of a dimmer switch according to the preceding claim, **characterised in that** the value of the threshold voltage Uₛ is between 50 and 200 peak V.

3. Method for detecting the disconnection of the light load (3) of a dimmer switch according to any of the preceding claims, **characterised in that** if said instruction is such that said stage supplies the load:
• measuring the dephasing ϕ between the voltage of the sector and the current which traverses the load (3) for a given command instruction value of the power supply stage (2) of the load (3),
• detecting and measuring the variation Δϕ of this dephasing ϕ in the absence of modification of said instruction,
• comparing between the measured variation Δϕ of dephasing ϕ and a predetermined variation threshold value Δϕₛ and
• modifying the command instruction of the power supply stage (2) to put it in a state of not supplying the load (3) if the measured variation value Δϕ of dephasing ϕ exceeds the predetermined threshold value Δϕs.

4. Method for detecting the disconnection of the light load (3) of a dimmer switch according to any of claims 1 and 2, **characterised in that**:
if said instruction is such that said stage (2) supplies the load (3),
• detecting the passage of the current in the load (3) through zero,
• generating a signal resulting from current synchronisation,
• measuring the duty cycle r_{c} of said signal,
• detecting and measuring a variation Δr_{c} of the duty cycle r_{c,}
• comparing between the variation Δr_{c} of the measured duty cycle r_{c} and a threshold value Δrₛ of predetermined variation and
• modifying the command instruction of the power supply stage (2) to put it in a state of non-supply of load (3) if the variation value Δr_{c} of the duty cycle r_{c} measured exceeds the predetermined threshold value Δrₛ.

5. Method for detecting the disconnection of the load (3) of a dimmer switch according to any of claims 3 to 4, **characterised in that** the dephasing ϕ threshold value Δϕs is between ± 100 µs and ± 1 ms.

6. Method for detecting the disconnection of the load (3) of a dimmer switch according to any of claims 3 to 5, **characterised in that** the threshold value Δr_{c} of the variation of the duty cycle r_{c} is between 1% and 10%.

7. Method for detecting the disconnection of the load (3) of a dimmer switch according to any of claims 3 to 6, **characterised in that** in the assumption that the instruction value is such that the power supply stage (2) supplies the load (3), then is put into state of non-supply following the detection of the disconnection of the load (3), the method proceeds to:
- measuring the voltage U_{pc} between the phase and the output of the supply stage (2),
- comparing at least a fraction of said voltage U_{pc} with a corresponding fraction of a predetermined threshold voltage Uₛ, lower than the peak voltage of the sector,
- blocking the dimmer switch in the state of non-supply of load (3) if the measured voltage U_{pc} is lower than the predetermined threshold voltage Uₛ; and
- reapplying the preceding command instruction of the power supply stage (2) of the load (3) if the measured voltage U_{pc} between the phase and the output is not lower than the predetermined threshold voltage Uₛ.

8. Device for detecting the disconnection of a light load (3) of a dimmer switch in the form of a variable power supply stage (2) by phase control connected to the sector and implementing the methods according to any of the preceding claims, comprising a programmable (1) control and driving unit of the dimmer switch, controlling the variable power supply stage (2) of the load (3) by phase control, a stage of detecting power surges (4), a stage of detecting the passage of the current (5) in the load (3) through zero and a stage of detecting the passage of the voltage (6) of the sector through zero, **characterised in that** it comprises a stage of measuring (4) the voltage between the sector phase (2) and the output (C) of the power supply stage (2).

9. Device for detecting the disconnection of a light load (3) of a dimmer switch according to the preceding claim, **characterised in that** the measurement stage (4) comprises a comparator to which voltage U_{pc} is applied to the input between the phase and the output (C) of the power supply stage (2), comparing said voltage U_{pc} to a threshold voltage value Uₛ.

10. Device for detecting the disconnection of a light load (3) of a dimmer switch according to the preceding claim, **characterised in that** said voltage U_{pc} is connected to the comparator via a resistance bridge fractioning the voltage applied to the input of the comparator.

11. Device for detecting the disconnection of a light load (3) of a dimmer switch according to any of claims 8 to 10, **characterised in that** the stage of detecting power surges and the stage of measuring (4) the voltage between the phase and the output (C) of the power supply stage (2) are one and the same circuit.

12. Device for detecting the disconnection of a light load (3) of a dimmer switch according to the preceding claim, **characterised in that** said circuit is integrated into the programmable (1) control and driving unit of the dimmer, and the setting of the value of the threshold voltage is then managed by the program.
